# EUROPEAN PATENT APPLICATION

(11) **EP 3 432 563 A1**
(43) Date of publication of application: **23.01.2019**
(21) Application number: 17182646.4
(22) Date of filing: 21.07.2017
(51) Int. Cl.: H04N 1/00, B33Y 99/00

(54) **METHOD FOR PRODUCING A MACHINE-READABLE CONTROLLING AND/OR OPERATING MEANS**

(71) Applicant: CL Schutzrechtsverwaltungs GmbH, 96215 Lichtenfels (DE)
(72) Inventor: Schumann, Philipp, 96274 Itzgrund - Schottenstein (DE); Hertel, Kai, 96149 Breitengüßbach (DE); Voigt, Timo, 91054 Erlangen (DE)
(74) Representative: Hafner & Kohl

(57) **Abstract**

Method for producing a machine-readable controlling and/or operating means (M) for controlling and/or operating at least one functionality of an apparatus (1) for additively manufacturing a three-dimensional object (2) by means of successive layerwise selective irradiation and consolidation of layers of a build material (3) which can be consolidated by means of an energy beam (4), comprising:
- providing a specified data format which the machine-readable controlling and/or operating means (M) to be produced shall have or which the machine-readable controlling and/or operating means (M) to be produced means shall generate,
- producing a provisional controlling and/or operating means (PM) having the specified data format or producing a provisional controlling and/or operating means (PM) which may generate data having the specified data format,
- checking if the produced provisional controlling and/or operating means (PM) fulfils at least one pre-defined certification criterion, and
- if the provisional controlling and/or operating means (PM) fulfils the at least one certification criterion,
- producing the machine-readable controlling and/or operating means (M) by providing at least one certification key (K) to the provisional controlling and/or operating means (PM).

## Description

The invention relates to a method for producing a machine-readable controlling and/or operating means for controlling and/or operating at least one functionality of an apparatus for additively manufacturing a three-dimensional object by means of successive layerwise selective irradiation and consolidation of layers of a build material which can be consolidated by means of an energy beam.

Apparatuses and methods for additively manufacturing a three-dimensional object by means of successive layerwise selective irradiation and consolidation of layers of a build material which can be consolidated by means of an energy beam, e.g. by means of a selective laser sintering process or a selective laser melting process, are widely known. It is also known that controlling and/or operating means are used for controlling and/or operating at least one functionality of these apparatuses and methods.

Frequently, these controlling and/or operating means are not produced by the manufacturer of respective apparatuses and methods for additively manufacturing three-dimensional objects, but by external service suppliers, e.g. software development suppliers. In view of diverse aspects concerning the operation of respective apparatuses and methods, e.g. aspects concerning safety, reliability, productivity, etc. of respective apparatuses and methods, it is important that the manufacturer can check and approve that a controlling and/or operating means provided by an external service supplier fulfils specified requirements.

Hitherto, controlling and/or operating means provided by external service suppliers are ready to be used for controlling and operating functionalities of an apparatus for additively manufacturing three-dimensional objects. Thus, an apparatus for additively manufacturing three-dimensional objects could generally be operated and/or controlled on basis of respective controlling and/or operating means provided by external service suppliers without being approved by the manufacturer.

Thus, there is a need for a reliable and practical measure which allows the manufacturer to check and approve that the controlling and/or operating means provided by external service supplier fulfils all specified requirements before actually controlling and/or operating an apparatus or a method for additively manufacturing of three-dimensional objects.

The object of the invention is to provide a reliable and practical measure which allows the manufacturer to check and approve that a controlling and/or operating means provided by an external service supplier fulfils all specified requirements before controlling and/or operating an apparatus or a method for additively manufacturing of three-dimensional objects.

The object of the invention is achieved by a method for producing a machine-readable controlling and/or operating means according to Claim 1. The Claims depending on Claim 1 relate to possible embodiments of the method according to Claim 1.

The method described herein relates to producing a machine-readable controlling and/or operating means (hereinafter "Means") for controlling and/or operating at least one functionality of an apparatus for additively manufacturing a three-dimensional object by means of successive layerwise selective irradiation and consolidation of layers of a, typically powder-like, build material which can be consolidated by means of an energy beam (hereinafter "Apparatus"). A respective Apparatus can be a selective laser sintering apparatus, a selective laser melting apparatus or a selective electron beam melting apparatus, for instance. A functionality of the Apparatus can be any hard- and/or software implemented functionality of any hard- and/or software implemented functional element of the Apparatus in context with an additive manufacturing process which can be implemented by the Apparatus.

A first exemplary group of functionalities of the Apparatus may refer to functionalities in context with the successive layerwise application of build material in a build plane and the selective irradiation of respective layers of build material in the build plane with an energy beam. Thus, a functionality of the Apparatus can be a build material applying functionality covering one, more or all functionalities of the Apparatus for applying a layer of build material in a build plane, an energy beam irradiating functionality covering one, more or all functionalities of the Apparatus for selectively irradiating a layer of build material in the build plane by means of at least one energy beam, etc.

A further exemplary group of functionalities of the Apparatus may refer to functionalities in context with data preparing and/or processing. Thus, a functionality of the Apparatus can be an object related data preparing and/or processing functionality covering one, more or all functionalities of the Apparatus for preparing and/or processing data of an object to be additively manufactured, e.g. the generation of data containing slices of an object to be additively manufactured from data containing the geometrical properties, particularly the shape, of the object to be additively manufactured, a process monitoring related data processing functionality covering one, more or all functionalities of the Apparatus for processing data output from process monitoring devices (cameras, sensors, etc.), e.g. chemical and/or physical data from the process chamber of the Apparatus, melt pool region within a build plane, etc.

As a first step of the method, a specified data format which the Means to be produced shall have or which the Means shall generate is provided. The provision of the specified data format which the Means to be produced shall have or shall generate is usually done by the manufacturer of the Apparatus. The specified data format is therefore, typically provided by a manufacturer of apparatuses for additively manufacturing three-dimensional objects. The data format can be a special data format which can be only read by Apparatuses of a special manufacturer.

The specified data format of the Means to be produced can be published on a publicly accessible platform. In other words, the specified data format can be published on a publicly accessible network resource, e.g. the Internet, and downloaded from that network resource. This is a very easy way for a manufacturer of Apparatuses to get in contact with a plurality of external service providers.

As a second step of the method following the first step, a provisional controlling and/or operating means (hereinafter "provisional Means") having the specified data format or a provisional Means which may generate data having the specified data format is produced. The production of the provisional Means is usually done by an external service supplier, e.g. an external software provider. The provisional Means is therefore, typically produced by an external software provider. The term "external" means that the service supplier or software provider, respectively is or belongs to an independent economic entity, e.g. a person, company, etc., which is economically not related with the manufacturer of the Apparatus.

The provisional Means is not configured for controlling and/or operating at least one functionality of an Apparatus. In other words, the provisional Means cannot be used for effectively controlling and/or operating at least one functionality of an Apparatus. The provisional Means can be configured in such a manner that it is not machine-readable by an Apparatus, i.e. cannot be machine-read by an Apparatus. However, the provisional Means can be used for simulation purposes, i.e. in particular for simulating controlling and/or operating at least one functionality of an Apparatus.

As a third step of the method following the second step, it is checked if the produced provisional Means fulfils at least one pre-defined certification criterion. The check if the provisional Means fulfils the at least one pre-defined certification criterion usually comprises checking the functionality of the provisional Means without actually controlling and/or operating an Apparatus. The check if the provisional Means fulfils at least one pre-defined certification criterion is usually done by the manufacturer of the Apparatus. Thus, the pre-defined criterion is usually also pre-defined by the manufacturer of the Apparatus. The check may comprise an approval step in which the manufacturer of the Apparatus - given that the provisional Means fulfils the at least one pre-defined criterion - may approve the provisional Means.

The pre-defined certification criterion may relate to at least one functionality of the provisional Means which needs to be checked and approved before the provisional Means is provided with a certification key. The pre-defined certification criterion may relate to at least one operating functionality for activating or deactivating at least one functionality of an Apparatus or a functional component of the Apparatus, e.g. a build material application unit, irradiating unit, data processing unit, etc. Also, a pre-defined certification criterion may relate to at least one controlling functionality for controlling at least one activated functionality of an Apparatus or a functional component of the Apparatus, e.g. a build material application unit, irradiating unit, data processing unit, etc. Also, a pre-defined certification criterion may relate to at least one safety functionality for activating, controlling or deactivating at least one safety measure, e.g. a safety interrupt or shutdown of at least one functional component of the Apparatus, during operation of at least one functionality of the Apparatus. Also, a pre-defined certification criterion may relate to at least one user interface functionality of a user interface, e.g. a graphical user interface, of an Apparatus.

As a fourth step of the method following the third step, in the case that the provisional Means fulfils the at least one certification criterion, the machine-readable Means, i.e. the end product, is produced by providing at least one certification key to the provisional Means. The fourth step is the decisive step for producing the Means since the provisional Means is not configured for controlling and/or operating at least one functionality of an Apparatus. The certification key can be a data extension, which may be added to or embedded within the provisional Means, to the provisional Means allowing that the provisional Means can be used for effectively controlling and/or operating at least one functionality of an Apparatus. Thus, the Means is actually generated by providing the provisional Means with at least one certification key. Providing the provisional Means with the certification key results in the Means which is (then) configured for controlling and/or operating at least one functionality of an Apparatus. The provision of the provisional Means with the certification key is usually done by the manufacturer of the Apparatus.

The method offers a reliable and practical measure which allows a manufacturer of Apparatuses to check and approve that the controlling and/or operating means provided by external service supplier fulfils all specified requirements before actually controlling and/or operating an apparatus or a method for additively manufacturing of three-dimensional objects.

The certification key can be provided by a hard- and/or software embodied certification device provided internally or externally with an Apparatus. The certification device is typically under the control of the manufacturer of the Apparatus.

The certification device may be configured to check and detect changes of the provisional Means in comparison to earlier versions of the provisional Means. Hence, the certification device may be used for determining changes of the provisional Means. In this regard, the certification device may be configured to output a message indicating detected changes of the provisional Means in comparison to an earlier version of the provisional Means.

The certification key can have a time-dependent validity. Thus, the validity of a certification key can expire after a certain period of time, e.g. a certain number of days, months, years. It can be required to renew the certification key after expiration of the validity of the certification key.

Typically, the Means is a software product, particularly a control or operational software product. Thus, typically, a software product is produced as the Means. In particular, a software product for preparing and/or processing data of objects to be additively manufactured, e.g. for generating data containing slices of the objects to be additively manufactured from data containing the geometrical properties, particularly the shape, of the objects to be additively manufactured, can be produced as the Means. Such software product can be denoted as a slicing software product.

The invention further relates to a method for operating an apparatus for additively manufacturing of three-dimensional object by means of successive layerwise selective irradiation and accompanying consolidation of build material layers of a build material which may be consolidated by means of an energy beam, e.g. a laser or electron beam. The method is characterized in that the apparatus is at partly operated and/or controlled on basis of a machine-readable control means produced by a method as described above. Thus, all annotations regarding the method for producing a Means apply in analogous manner.

Exemplary embodiments of the invention are described with reference to the Fig., whereby:
- Fig. 1: shows a flow chart of a method for producing a machine-readable controlling and/or operating means according to an embodiment;
- Fig. 2: shows a principal drawing of an apparatus for additively manufacturing three-dimensional objects.

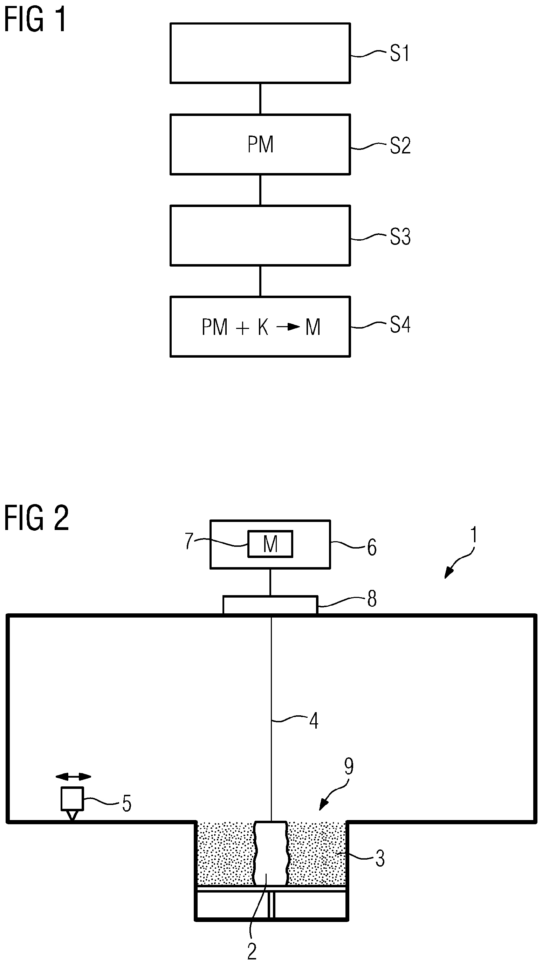

Fig. 1 shows a flow chart of a method for producing a machine-readable controlling and/or operating means M according to an embodiment.

The method relates to producing a machine-readable controlling and/or operating means M for controlling and/or operating at least one functionality of an apparatus 1 for additively manufacturing a three-dimensional object 2 by means of successive layerwise selective irradiation and consolidation of layers of a build material 3 which can be consolidated by means of an energy beam 4.

A functionality of the apparatus 1 can be any hard- and/or software implemented functionality of any hard- and/or software implemented functional element of the apparatus 1 in context with an additive manufacturing process which can be implemented by the apparatus 1.

The means M to be produced is typically a software product, particularly a control or operational software product. The software product can be a software product for preparing and/or processing data of objects 2 to be additively manufactured, e.g. for generating data containing slices of the objects 2 to be additively manufactured from data containing the geometrical properties, particularly the shape, of the objects 2 to be additively manufactured. Such software product can be denoted as a slicing software product.

As a first step S1, a specified data format which the means M to be produced shall have or which the means M to be produced shall generate is provided. The provision of the specified data format which the means M shall have or shall generate is usually done by the manufacturer of the Apparatus. The data format can be a special data format which can be only read by apparatuses 1 of a special manufacturer.

The specified data format of the means M to be produced can be published on a publicly accessible platform, i.e. a publicly available network resource, e.g. the Internet, and downloaded from that network resource.

As a second step S2, a provisional controlling and/or operating means PM having the specified data format or a provisional controlling and/or operating means PM which may generate data having the specified data format is produced. The production of the provisional means PM is usually done by an external service supplier, e.g. an external software provider. The provisional means PM is therefore, typically produced by an external software provider.

The provisional means PM is not configured for controlling and/or operating at least one functionality of an apparatus 1 and thus, cannot be used for effectively controlling and/or operating at least one functionality of an apparatus 1. This can be achieved in that the provisional means PM is not machine-readable by the apparatus 1, i.e. cannot be machine-read by the apparatus 1. However, the provisional means PM can be used for simulation purposes, i.e. in particular for simulating controlling and/or operating at least one functionality of the apparatus 1.

As a third step S3, it is checked if the produced provisional means PM fulfils at least one pre-defined certification criterion. The check if the provisional means PM fulfils the at least one pre-defined certification criterion usually comprises checking the functionality of the provisional means PM without actually controlling and/or operating an apparatus 1. The check if the provisional means PM fulfils at least one pre-defined certification criterion is usually done by the manufacturer of the respective apparatus 1. The check may comprise an approval step in which the manufacturer- given that the provisional means PM fulfils the at least one pre-defined criterion - may approve the provisional means PM.

The pre-defined certification criterion may relate to at least one functionality of the provisional means PM which needs to be checked and approved before the provisional means PM is provided with a certification key K. The pre-defined certification criterion may relate to at least one operating functionality for activating or deactivating at least one functionality of an apparatus 1 or a functional component of the apparatus 1, e.g. a build material application unit, irradiating unit, data processing unit, etc. Also, a pre-defined certification criterion may relate to at least one controlling functionality for controlling at least one activated functionality of an apparatus 1 or a respective functional component of the apparatus 1. Also, a pre-defined certification criterion may relate to at least one safety functionality for activating, controlling or deactivating at least one safety measure, e.g. a safety interrupt or shutdown of at least one functional component of an 1pparatus 1, during operation of at least one functionality of the apparatus 1. Also, a pre-defined certification criterion may relate to at least one user interface functionality of a user interface, e.g. a graphical user interface, of an apparatus 1.

As a fourth step S4, in the case that the provisional means PM fulfils the at least one certification criterion, the machine-readable means M , i.e. the end product, is produced by providing at least one certification key K to the provisional means PM. The fourth step is the decisive step for producing the means M since the provisional means PM is not configured for controlling and/or operating at least one functionality of an apparatus 1. The certification key can be a data extension to the provisional means PM allowing that the provisional means PM can be used for effectively controlling and/or operating at least one functionality of an apparatus. Providing the provisional means PM with the certification key K results in the means M which is (then) configured for controlling and/or operating at least one functionality of the Apparatus 1. The provision of the provisional means PM with the certification key K is usually done by the manufacturer of the apparatus 1.

The certification key K can be provided by a hard- and/or software embodied certification device (not shown) provided internally or externally with an apparatus 1. The certification device is typically under the control of the manufacturer of the apparatus 1.

The certification device may be configured to check and detect changes of the provisional means PM in comparison to earlier versions of the provisional means PM. The certification device may be configured to output a message indicating detected changes of the provisional means PM in comparison to an earlier version of the provisional means PM.

The certification key K can have a time-dependent validity. Thus, the validity of the certification key K can expire after a certain period of time, e.g. a certain number of days, months, years. It therefore, can be required to renew the certification key K after expiration of the validity of the certification key K.

The means M may be used in a method for operating an apparatus 1 for additively manufacturing a three-dimensional object 2 by means of successive layerwise selective irradiation and accompanying consolidation of build material layers of a powder-like build material which may be consolidated by means of an energy beam, e.g. a laser or electron beam. Operation of the apparatus 1 is at least partly controlled on basis of the means M.

Fig. 2 shows a principal drawing of an apparatus 1 for additively manufacturing three-dimensional objects 2, e.g. a technical component, by means of successive layerwise selective irradiation and accompanying consolidation of layers of a powder-like build material 3, e.g. a metal powder, which can be consolidated by means of an energy beam 4.

Only the essential functional components of the apparatus 1, which may be embodied as a selective laser melting apparatus, are depicted in Fig. 2 and explained in the following, namely a build material application unit 5, an irradiation unit 8, a control unit 6 and a data processing unit 7. The build material application unit 5, which may comprise a coating device, is configured for applying a build material layer in a build plane 9 of the apparatus 1. The irradiation unit 8, which may comprise an energy beam generating and an energy beam deflecting device, is configured for selectively irradiating build material layers 9 with at least one energy beam 4. The control unit 6 is configured for controlling operation of the functional components of the apparatus 1, e.g. the build material application unit 5 and the irradiation unit 8, on basis of control or operational data. The data processing unit 7 is configured to generate respective control or operational data. The means M may be implemented in the data processing unit 7 or represent the data processing unit 7 itself.

## Claims

1. Method for producing a machine-readable controlling and/or operating means (M) for controlling and/or operating at least one functionality of an apparatus (1) for additively manufacturing a three-dimensional object (2) by means of successive layerwise selective irradiation and consolidation of layers of a build material (3) which can be consolidated by means of an energy beam (4), comprising the steps of:
- providing a specified data format which the machine-readable controlling and/or operating means (M) to be produced shall have or which the machine-readable controlling and/or operating means (M) to be produced means shall generate,
- producing a provisional controlling and/or operating means (PM) having the specified data format or producing a provisional controlling and/or operating means (PM) which may generate data having the specified data format,
- checking if the produced provisional controlling and/or operating means (PM) fulfils at least one pre-defined certification criterion, and
- if the provisional controlling and/or operating means (PM) fulfils the at least one certification criterion,
- producing the machine-readable controlling and/or operating means (M) by providing at least one certification key (K) to the provisional controlling and/or operating means (PM).

2. Method according to Claim 1, **wherein** the specified data format is provided by a manufacturer of apparatuses (1) for additively manufacturing three-dimensional objects (2).

3. Method according to Claim 1 or 2, **wherein** the provisional controlling and/or operating means (PM) is produced by an external software provider.

4. Method according to any of the preceding Claims, **wherein** the pre-defined certification criterion relates to
- at least one operating functionality for activating or deactivating at least one functionality of an apparatus (1) for additively manufacturing three-dimensional objects (2), and/or
- at least one controlling functionality for controlling at least one activated functionality of an apparatus (1) for additively manufacturing three-dimensional objects (2), and/or
- at least one safety functionality for activating, controlling or deactivating at least one safety measure during operation of at least one functionality of an apparatus (1) for additively manufacturing three-dimensional objects (2), and/or
- at least one user interface functionality of a user interface of an apparatus (1) for additively manufacturing three-dimensional objects (2).

5. Method according to any of the preceding Claims, **wherein** the provisional controlling and/or operating means (PM) cannot be used for controlling and/or operating at least one functionality of an apparatus (1) for additively manufacturing a three-dimensional object (2).

6. Method according to any of the preceding Claims, **wherein** the provisional controlling and/or operating means (PM) can be used for simulating controlling and/or operating at least one functionality of an apparatus (1) for additively manufacturing a three-dimensional object (2).

7. Method according to any of the preceding Claims, wherein the provisional controlling and/or operating means (PM) cannot be machine-read by an apparatus (1) for additively manufacturing a three-dimensional object (2).

8. Method according to any of the preceding Claims, **wherein** the certification key is a data extension to the provisional controlling and/or operating means (PM) allowing that the provisional controlling and/or operating means (PM) can be used for simulating controlling and/or operating at least one functionality of an apparatus (1) for additively manufacturing a three-dimensional object (2).

9. Method according to any of the preceding Claims, **wherein** the certification key (K) is provided by a certification device provided internally or externally with an apparatus (1) for additively manufacturing of a three-dimensional object (2).

10. Method according to Claim 9, **wherein** the certification device checks and detects changes of the provisional controlling and/or operating means (PM) in comparison to earlier versions of the provisional controlling and/or operating means (PM).

11. Method according to any of the preceding Claims, **wherein** a software product, particularly a control software product, is produced as the machine-readable controlling and/or operating means (M).

12. Method according to any of the preceding Claims, wherein the specified data format of the machine-readable control means (M) to be produced is published on a publicly accessible platform.

13. Method for operating an apparatus (1) for additively manufacturing of a three-dimensional object (2) by means of successive layerwise selective irradiation and consolidation of build material layers of a build material (3) which may be consolidated by means of an energy beam (4), **characterized in that** the apparatus (1) is at least partly controlled and/or operated on basis of a machine-readable control means (M) produced by a method according to one of the preceding Claims.
